(19) Europäisches Patentamt

European Patent Office

Office européen des brevets

(11) Veröffentlichungsnummer: **0 254 286**
**A2**

(12) **EUROPÄISCHE PATENTANMELDUNG**

(21) Anmeldenummer: 87110595.3

(22) Anmeldetag: 22.07.87

(51) Int. Cl.⁴ **F24D 5/10** , F24D 3/14 , F24D 13/02

(30) Priorität: 24.07.86 DE 3624987

(43) Veröffentlichungstag der Anmeldung:
27.01.88 Patentblatt 88/04

(84) Benannte Vertragsstaaten:
AT CH DE FR GB IT LI NL SE

(71) Anmelder: **Groll, Hartmut**
**Werderstrasse 15**
**D-7570 Baden-Baden(DE)**

(72) Erfinder: **Groll, Hartmut**
**Werderstrasse 15**
**D-7570 Baden-Baden(DE)**

(74) Vertreter: **Patentanwälte Dipl.-Ing. E. Eisele**
**Dr.-Ing. H. Otten**
**Seestrasse 42**
**D-7980 Ravensburg(DE)**

(54) **Heizsystem.**

(57) Es wird ein Heizsystem für eine Fußboden-oder Wandheizung vorgeschlagen, welches in einem geschlossenen Kreislauf mit Warmluft beheizbar ist. Um eine völlig gleichmäßige oder auch gezielte Flächenerwärmung zu erreichen, sind geradlinige Hauptkanäle und hiervon seitlich abzweigende Nebenkanäle vorgesehen, deren U-förmiger Querschnitt mittels einer Folie ausgeklebt und nur an den Stellen geöffnet wird, an denen Warmluft austreten soll. Hierfür dienen Fliesenbausteine mit Längs-und Querkanälen.

Fig 1

## "Heizsystem"

Die Erfindung betrifft ein Heizsystem nach dem Oberbegriff des Anspruchs 1.

Es sind luftbeheizte und warmwasserbeheizte Fußbodenheizungen bekannt geworden.

Aus der europäischen Patentanmeldung Nr. 111763 des Anmelders ist ein Fliesenbaustein bekannt geworden, der sich sowohl zum Einsatz als Luftheizung, infolge seines Kanallabyrinths mit Längs-und Querkanälen jedoch vorzugsweise als Warmwasser-Heizungssystem eignet. Die Heizrohre werden in die von unten zu öffnenden Kanäle eingebracht.

Unter dem System "Ökotherm" ist ein Heizsystem für Fußbodenheizungen oder Wandheizungen bekannt geworden, bei welchem Hohlkörpersteine aus gebranntem Ton in einer Richtung verlaufende Kanäle aufweisen, so daß sich ein parallel verlaufendes Kanalsystem ohne Querverbindungen dieser Kanäle ergibt. Über ein Zuluftrohr auf einer Wandseite wird Warmluft in die Kanäle eingeblasen und auf der gegenüberliegenden Wandseite wieder entnommen, so daß sich ein Luftkreislauf, der ggf. geschlossen ausgeführt ist, ergibt. Dieses System hat den Nachteil, daß die in der Zuluft zugeführte Wärme schon nach kürzester Entfernung an die Fliese abgegeben ist, da Ton ein extrem guter Wärmeleiter ist. Der Fußboden wird demnach im Bereich des ersten Meters aufgeheizt, während der restliche Boden kalt bleibt. Nur über eine sehr lange Aufheizzeit mit ununterbrochener Wärmeluftzufuhr kann eine Bodenfläche von beispielsweise 4 m Länge einigermaßen gleichmäßig erwärmt werden. Dies wurde durch genaue Messungen mit Computerauswertung in einer Klimakammer in einer Hochschule festgestellt.

Das bekannte System hat weiterhin den Nachteil, daß die Luftströmung im Zuluftkanal selbst abgeblockt wird, da die Warmluft quer zur ursprünglichen Strömungsrichtung durch Öffnungen im Zuluftkanal in den Fußboden ausströmen soll. Ein wirksamer Überdruck kann in einem solchen Kanalsystem nur unzureichend aufgebaut werden.

Bei dem weiterhin bekannten System "Hypokausten-Heizung Bio-Therm" wird ein Hohlraum-Fußboden dadurch geschaffen, daß im Bodenunterbau mit Höckern versehene Kunststoff-Platten verlegt werden. Wird z. B. eine Hartfaserplatte oder eine Estrichplatte auf diese Höcker gelegt, so entsteht ein Hohlraum, der nur durch diese Kegelstümpfe unterbrochen ist. Das System sieht vor, daß von unten, d. h. von dem Raum, der unter diesem Zimmer liegt, über einen Kanal Warmluft in einen flachen, runden Verteiler eingespeist wird. Von diesem Verteiler zweigen mehrere flexible Rohre ab, die die Warmluft möglichst gleichmäßig im Boden verteilen sollen. Da auch dieses System eine wirksame Fußbodenerwärmung in angemessener Zeit nicht zuläßt, läßt man die in den Boden geführte Warmluft durch Gitterroste im Fußboden in den Raum austreten, um hierdurch den Raum schneller zu erwärmen. Diese Raumluft wird dann wieder abgesaugt und zur Wiederaufheizung gebracht.

Dieses "Bio-Therm"-System entspricht einer direkten Warmluftheizung mit allen bekannten Nachteilen, die mit frei strömender Warmluft verbunden sind. Dies sind insbesondere Schmutz und Bakterien sowie trockene und damit ungesunde Luft. Durch das offene System werden Schmutz und Bakterien auch in dem Kammerbereich des Fußbodens abgelagert, was zu Infektionsherden führen kann. Außerdem ist es bauphysikalisch und baubiologisch unerwünscht, Kunststoffplatten im Boden zu verwenden, da eine natürliche Diffusion im Deckenbereich unterbunden wird. Weiterhin ist die mangelnde Schallisolierung bei offenen Warmluftheizsystemen hinreichend bekannt. Die Schalldämmung des Bodenaufbaus reduziert sich deshalb aufgrund der Boden-Gitter-Durchgänge auf die spezifische Schalldämmung der verwendeten Isoliermatten.

Die beiden zuvor beschriebenen Systeme haben gemeinsam den Nachteil, daß die Warmluftkanäle von einer externen Heizzentrale aus gespeist werden müssen. Die erzeugte Warmluft muß mittels eines großen Ventilators - der allerdings keinen Druck aufbauen kann - durch die Kanäle und weiterhin durch das ganze Haus in alle Räume geleitet werden. Es ist bekannt, daß sich Warmluft nicht wie z. B. Wasser fortbewegen läßt. Mit jedem Meter Transportweg der Luft findet ein erheblicher Druckabfall und eine Verminderung der Strömungsgeschwindigkeit statt. Schließlich muß die Luft bei den bekannten Systemen um Kurven und Ecken geführt werden, was bei einer zentralen Versorgung mit heißluft in einem Haus unvermeidlich ist. Um die Wärmeverluste klein zu halten, müssen die Luftkanäle sehr groß dimensioniert werden, was Platzprobleme mit sich bringt.

Weiterhin ist bei den bekannten Systemen der bautechnische Aufwand sehr groß. Dabei werden meist schalttechnische Maßnahmen aus Kosten- und Platzgründen vernachläßigt, so daß eine wirksame Schalldämmung nicht in ausreichendem Maße gewährleistet ist. Warmluftkanäle werden nicht ohne Grund als "Haustelefon" bezeichnet. Es ist weiterhin bekannt, daß Ventilatoren keinen nennenswerten Druck aufbauen können. Je weiter Räume von Ventilationsaggregat entfernt liegen, desto schlechter werden sie versorgt.

Schließlich ist eine individuelle Wärmesteuerung einzelner Räume, und zwar unter Einsatz nur derjenigen Energiemenge, die am Ort des Verbrauchs tatsächlich benötigt wird, ausgeschlossen. Auch wenn nur ein Teil der Räume beheizt werden soll, muß das ganze Heizaggregat in Betrieb gesetzt werden. Teilauslastung bedeutet aber einen ungünstigen Wirkungsgrad und damit hohe spiezfische Energiekosten. Die bekannten Systeme sind träge mit entsprechend eingeschränkter Anpassung an Lastwechsel. Sie sind weiterhin verlegetechnisch aufwendig und eignen sich insbesondere nicht zum Selbstbau bzw. zum nachträglichen Einbau und zur Altbausanierung.

Der vorliegenden Erfindung liegt die Aufgabe zugrunde, die vorgenannten Nachteile zu vermeiden und insbesondere ein Heizsystem für Fußböden oder Wandbeheizung zu schaffen, welches mit Warmluft wirksam beheizt wird. In einem geschlossenen System soll insbesondere die aufheizbare Luft derart geführt werden, daß sich eine völlig gleichmäßige oder auch gezielte Flächenerwärmung ergibt.

Diese Aufgabe wird ausgehend von einem Heizsystem der einleitend bezeichnenden Art erfindungsgemäß durch die kennzeichnenden Merkmale des Anspruchs 1 gelöst.

Die in den Unteransprüchen angegebenen Maßnahmen stellen eine Weiterentwicklung und Verbesserung des im Hauptanspruch dargestellten Heizsystems dar.

Das erfindungsgemäße Heizsystem verwendet vorzugsweise den in der europäischen Patentanmeldung Nr. 111763 angegebenen Fliesenbaustein. Diese Veröffentlichung wird deshalb ausdrücklich zum Inhalt dieser Anmeldung gemacht. Auf die Vorteile dieses Fliesenbausteins wird hingewiesen.

Für die vorliegende Erfindung maßgeblich ist die Verwendung einer einstückig ausgeführten Keramikfliese aus gebranntem Ton mit charakteristischen Längs-und Querkanälen im Unterbau und präzisionsbeschliffener allseitiger Nut-und Federverzahnung. Die Kanäle fluchten miteinander in Längs-und Querrichtung, wobei sie nach unten durch Ausbrechen der Bodenplatte leicht geöffnet werden können, sofern dies erforderlich ist. Sie können beispielsweise so über verlegte Rohre gestülpt werden.

Die Erfindung geht von der Erkenntnis aus, daß Luft stets den Weg des geringsten Widerstands nimmt und in dieser Richtung eine Hauptstromrichtung bildet. Hindernisse, Umlenkungen oder Reibung an rauher Wandung bewirken eine starken Abfall der Strömungsenergie. Sofern Luft éber weite Strecken unkontrolliert durch Kanäle, Abzweigungen, Labyrinthe usw. geführt wird, tritt ein starker Druckverlust auf. Dies hat zur Folge, daß Luft nur über relativ kurze Strecken und in möglichst reibungsarmen Kanälen und nur geradlinig wirksam geführt werden kann. Ein Gebläse kann auch nur über kurze Wege einen geringen Druck (bis ca. 250 Pa) aufbauen, d. h. nur über wirksame Luft-Strömungsgeschwindigkeit erzielbar.

Schließlich ist noch die Erkenntnis maßgeblich, daß nur schnellströmende Luft eine genügende Wärmeenergie transportieren kann, denn im Vergleich zu Wasser wird etwa die 2000-fache Luftmenge benötigt, um die gleiche Wärmemenge wie Wasser zu transportieren.

Demzufolge sieht die Erfindung vor, daß die zu beheizende Fläche, z. B. Fußbodenfläche, mit einem Luftkanalsystem durchzogen ist, welches gewährleistet, daß warme Luft auch in die entlegendsten Ecken und Winkel der zu beheizenden Fläche gelangt. Hierbei ist es maßgeblich, daß nur geradlinige, reibungsarme und gezielt geführte Luftkanäle vorhanden sind, die zu den übrigen zu beheizenden Fliesen mit Längs-und Querkanälen führen. Erfindungsgemäß werden hierfür die Haupt-und Nebenluftkanäle sowie eventuell der Boden in diesem Bereich mit einer selbstklebenden Alu-Folie beklebt, wobei nur dort Öffnungen eingeschnitten werden, die zur Luftführung notwendig sind. Hierdurch findet in diesen geradlinigen, rundum verspiegelten Haupt-und Nebenluftkanälen mit geringster Reibung ein sehr rascher Lufttransport, jedoch infolge der Isolierwirkung der Folie kaum ein Warmeaustausch mit diesen Fliesen statt. Erst wenn die Warmluft von den Nebenluftkanälen in die speziellen Fliesen mit Längs-und Querkanälen strömt, findet ein rascher Wärmeaustausch bzw. eine rasche Erwärmung dieser Heizfliesen statt. Die Haupt-und Nebenluftkanäle dienen deshalb zur schnellen Zuführung der Warmluft an die Stellen der Fläche, die beheizt werden sollen. Durch entsprechendes Aufschneiden der Alu-Folie zur Anordnung der Luftaustrittsöffnungen kann eine ganz gezielte Luftführung vorgenommen werden.

Die von den Nebenkanälen zu den Heizfliesen geführte Warmluft wird über Luftsammelkanäle und Rückluftkanäle zu einem Gebläse zurückgeführt um auf diesem Weg wiederum erwärmt und in die Hauptluftkanäle transportiert zu werden.

Die Erwärmung geschieht vorzugsweise mittels Heizstäben, die in den Hauptluftkanälen einem Radialgebläse nachgeschaltet sind. Alternativ oder zusätzlich können in den Luftsammelkanälen oder im Rückluftkanal Wasserrohre als Heizelemente für die zirkulierende Warmluft vorhanden sein.

Weitere Einzelheiten und Vorteile der Erfindung sind in den Figuren dargestellt und im nachfolgend beschriebenen Ausführungsbeispiel näher erläutert. Es zeigen

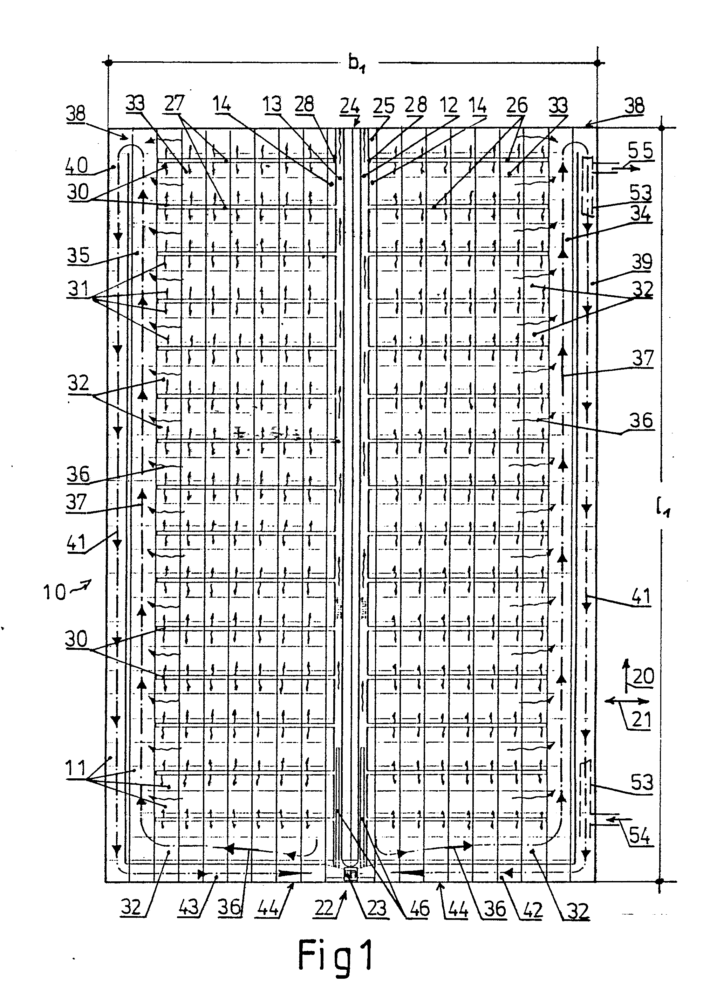

.Fig. 1 ein Strömungsschema für die Luftführung im Heizsystem,

Fig. 2a bis g verschiedene Ausführungsformen und Ansichten von zu verwendenden Fliesen und

Fig. 3a bis d ein Ausführungsbeispiel für ein Heizsystem.

Die in der Fig. 1 dargestellte Fläche (10) stellt beispielsweise den Fußboden eines Raumes der Länges $l_1$ = 8 m und der Breite $b_1$ = 5 m dar. Die Fläche (10) kann jedoch auch eine Wand der Höhe $l_t$ und der Breite $b_1$ darstellen. Im weiteren wird die Fläche als Fußbodenfläche beschrieben.

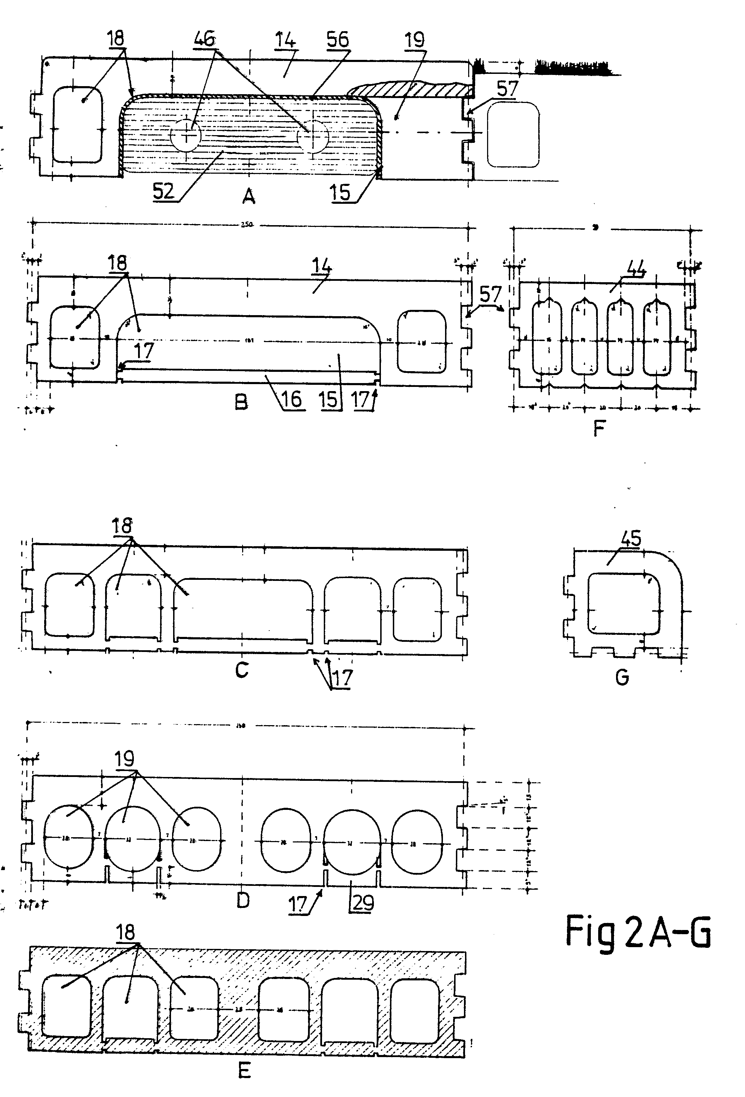

Die Fläche (10) ist mit einer Vielzahl von Keramikfliesen (11) belegt, wie sie in ihren verschiedenen Bauformen in Fig. 2 dargestellt sind. In der Mittte des Raumes laufen zwei geradlinige, parallele Hauptluftkanäle (12, 13), gebildet aus den in Fig. 2a oder 2b dargestellten Hauptkanal-Fliesenbaustein (14), die jeweils paarweise nebeneinander angeordnet sind. In Fig. 1 sind beispielsweise 2 x 31 Hauptkanal-Fliesenbausteine nebeneinander angeordnet. Wie aus Fig. 2a bzw. 2b ersichtlich, erhält der Hauptkanal-Fliesenbausteine im unteren Bereich eine größere Aussparung (15), die beispielsweise durch Herausbrechen der Bodenplatte (16) U-förmig geöffnet wird. Hierfür sind Sollbruchstellen (17) über die ganze Länge der Fliese vorgesehen.

Sämtliche Fliesenbausteine (11), d. h. auch die Hauptkanal Fliesenbausteine (14) weisen neben den Längskanälen (18) wie in Fig. 2a bis c dargestellt, auch hierzu senkrecht verlaufende Querkanäle (19) auf, wie in Fig. 2d sowie Fig. 2a im Schnitt dargestellt. Die Kanäle (18, 19) kreuzen sich deshalb in jeder Fliese, wobei die Kanäle (18 bzw. 19) aller hintereinander und nebeneinander angeordneten Fliesen in Längsrichtung (Pfeil 20) sowie in Querrichtung (Pfeil 21) fluchten.

Um nun in den hintereinander aufgereihten Hauptkanal-Fliesenbausteinen einen geradlinigen, zunächst geschlossenen Hauptluftkanal (12, 13) zu bilden, wird die U-förmige Aussparung (15), d. h. der größere mittlere Längskanal mit einer werkseitig zuvor passend zugeschnittenen, selbstklebenden Folie (56), vorzugsweise einer Aluminium-Folie ausgeklebt, nachdem zuvor die Bodenplatte (16) herausgenommen wurde. Damit entstehen zunächst zwei geradlinige geschlossene spiegelglatte Hauptluftkanäle (12, 13), deren geöffnete Bodenfläche ebenfalls noch mit Folie verspiegelt wird, so daß sich eine Rundumverspiegelung ergibt. Am Lufteintrittsbereich (22) sind die Hauptluftkanäle durch ein Radialgebläse begrenzt und an der gegenüberliegenden Stirnseite (24) durch eine spezielle Randfliese (25) verschlossen.

Im Ausführungsbeispiel nach Fig. 1 werden von den Hauptluftkanälen (12, 13) seitlich abzweigende Nebenluftkanäle (26, 27) dadurch gebildet, daß in die zunächst durchgehende Alu-Folie (56) Hauptluftaustrittsöffnungen (28) als Zugangsöffnungen zu den Querkanälen (19) eingeschnitten werden. Im Ausführungsbeispiel nach Fig. 1 geschieht dies bei jeder zweiten Fliese, so daß in jeder zweiten Quer-Fliesenreihe (33) ein Nebenluftkanal (26) in Querrichtung (Pfeil 21) gebildet wird. Jeder Nebenluftkanal wird wiederum durch Entfernung einer entsprechenden Bodenplatte (29) geöffnet und wiederum mit einer Alu-Folie U-förmig und am Boden geschlossen ausgekleidet. Hierdurch ensteht wiederum ein in sich geschlossener, geradliniger und glatter, rundum verspiegelter Nebenluftkanal.

In den Nebenluftkanal (26, 27) werden wiederum Einschnitte in die Alu-Folie eingebracht, zur Bildung der Nebenluftaustrittsöffnungen (30), die in der Fig. 1 mit kleinen Pfeilen (31) angedeutet sind. Die Luft strömt damit erstmals unkontrolliert in den die Nebenluftaustrittsöffnungen (30) umgebenden Bereich der Fliese. Hauptluftkanal (12, 13) sowie Nebenluftkanal (26, 27) dienen demnach nicht zur Wärmeübertragung an die Fliese, sondern vornehmlich zum Transport der Luft an die Nebenluftaustrittsöffnungen in den Nebenluftkanälen. Die Luft gelangt dann in die Längs-und Querkanäle der jeweiligen sich anschließenden Heizfliesen (32), d. h. in die Fliesenreihe, die zwischen jeweils zwei parallel verlaufenden, Nebenluftkanäle (26, 27) aufweisenden Fliesenreihen angeordnet sind. Selbstverständlich können auch mehr als eine Heizfliesenreihe (32) zwischen jeweils zwei parallel und nebeneinander laufenden Fliesenreihen mit Nebenluftkanälen angeordnet sein.

Das Prinzip der Haupt-und Nebenluftkanäle beruht demnach darin, daß die mit Alu-Folie ausgeklebten Kanäle überall dort aufgeschnitten werden, wo die Warmluft bevorzugt hinströmen soll. Da die Alu-Folie selbst eine Art Isolierung gegenüber der Fliese darstellt, wird ein schnelles Aufheizen der Hauptkanal-Fliesenbausteine (14) sowie Nebenkanal-Fliesenbausteine (33) vermieden. Erst wenn die Warmluft aus den Nebenluftkanälen (26, 27) durch die entsprechenden Nebenluftaustrittsöffnungen (30) (Pfeil 31) austritt, erfolgt der eigentliche Aufheizvorgang in den sich anschließenden Heizfliesen (32). In diesem Stadium hat sich aber die Warmluft über die gesamte zu heizende Fläche gleichmäßig verteilt bzw. wurde durch entsprechende Luftführung gezielt verteilt. So können beispielsweise in einem Raum bestimmte Bodenbereiche stärker aufgeheizt werden als andere. Dies geschieht durch die gezielte Luftführung in den Haupt-und Nebenkanälen sowie Vorsehung der entsprechenden Luftaustrittskanälen.

Die aus den Nebenluftaustrittsöffnungen (30) ausströmende Heizluft erwärmt die Heizfliesen (32), indem die Warmluft durch die in dieser Heizfliese offenen Längs-und Querkanäle strömt. Die Anordnung der Längs-und Querkanäle (18, 19) in den Heizfliesen (32) wird derart gewählt, daß ein besonders guter Wärmeübergang von den Kanälen (18, 19) zur Oberfläche erfolgt. Die Heizfliesen (32) können demnach prinzipiell entsprechend der Figurendarstellung 2a bis 2c für die Längskanäle (18) bzw. 2d für die Querkanäle ausgestaltet sein. Eine weitere Variante für eine Boden/Wandfliese ist in der Fig. 2e mit entsprechenden Längskanälen (18) dargestellt.

Da es sich dem erfindungsgemäßen Prinzip um ein geschlossenes Heizsystem handelt, d. h. die Heißluft verbleibt ausschließlich innerhalb des Heizsystems und tritt nicht in das Rauminnere, wird die Heißluft aus den Heizfliesen (32) in seitlich der zu beheizenden Fläche (10) angeordneten Luftsammelkanäle (34, 35) geführt (Pfeil 36). Die Luftsammelkanäle (34, 35) laufen demnach parallel zu den Luftsammelkanäle (12, 13) mit einer gleichsinnigen Strömungsrichtung (Pfeil 37), d. h. die aus den Heizfliesen (32) austretende Luft (Pfeil 36) wird zunächst bis zum entgegengesetzten Ende (38) von Lufteintrittsbereich (22) geführt bevor sie über parallel zu den Luftsammelkanälen (34, 35) verlaufenden Rückluft-Längskanälen (39, 40) seitlich der Fläche (10) in Richtung Lufteintrittsbereich (22) zurückgeführt wird (Pfeil 41).

Die Luftführung bis zum hinteren Ende (38) bewirkt, daß kein Luftkurzschluß dadurch entsteht, daß die Eintrittswarmluft im Bereich (22) über den kürzesten Weg, d. h. über den ersten Nebenluftkanal zum Ausgangspunkt zurückströmt. Die gesamte Warmluft muß deshalb den gleichen Weg zurücklegen und damit den gleichen Strömungswiderstand überwinden.

Am Ende der Rückluft-Längskanäle (39, 40) - schließen sich stirnseitig der Fläche (10) die Rückluft-Querkanäle (42, 43) an. Die an der Fläche (10) abgekühlte Warmluft gelangt damit zurück zu dem Ausgangsbereich (22). Die Luftströmung im Heizsystem wird durch das Radialgebläse (23), welches vorzugsweise beidseitig saugend ausgebildet ist, befördert. Die seitlich angesaugte Luft wird mit hoher Geschwindigkeit in Richtung der Hauptluftkanäle (12, 13) ausgestoßen. Bei zunehmendem Gegendruck steigt die Leistung des Gebläses an. Der Platzberdarf ist so gering, daß er vor den Hauptluftkanälen (12, 13) im Lufteintrittsbereich (22) angeordnet werden kann.

Bei einer Fläche von beispielsweise 8 x 5 m² werden ca. 450 m³ pro Stunde Luft umgewälzt. Die Luft strömt mit einer hohen Geschwindigkeit durch die Haupt-und Nebenluftkanäle bevor sie in die Heizfliesen (32) gelangt. Der Rücksog erfolgt über die Luftsammelkanäle (34, 35) bzw. Rückluftkanäle (39, 40 bzw. 42, 43).

Die an der Gebläseöffnung ausströmende Luft wird durch geeignete Führungsprofile, die bereits im Gebläse (23) angesetzt sind so geteilt, daß sie genau in die beiden Hauptluftkanäle (12, 13) strömt. Es kann für jeden Hauptkanal auch ein eigenes Gebläse (23) eingesetzt werden.

Der gesamte Fußboden gemäß Darstellung in Fig. 1 wird allseitig luftdicht verschlossen, was mittels passenden Randfliesen (44) und Eckfliesen (45) wie in Fig. 2f und 2g dargestellt, geschieht. Alle Fliesen weisen seitlich eine rundum laufende präzisionsgeschliffene Nut-und Federverbindung (57) auf, die das verlegte System völlig abdichtet. Die Herstellung dieser Präzisionsfliese ist in der vorgeschlagenen deutschen Patentanmeldung Nr. 35 29 358.6 angegeben. Auf dieses Herstellungsverfahren wird ausdrücklich Bezug genommen.

Für die Aufheizung der Warmluft kommen drei verschiedene Möglichkeiten in Betracht.

Als einfache und wirksame Methode zur Aufheizung der Warmluft haben sich elektrische Heizstäbe (46) erwiesen, die schematisch in Fig. 1 angedeutet sind. Die Heizstäbe oder Heizreigister (46) werden dem Gebläse (23) entweder vor-oder nachgeschaltet. Die Fig. 1 zeigt ein nachgeschaltetes Heizsystem, d. h. die vom Gebläse (23) ausströmende Luft wird erwärmt. Bei vorgeschalteten Heizregistern wird die in das Gebläse strömende Luft erwärmt. Die Heizstäbe (46) können thermostatisch geregelt und mit den Einschaltzeiten des Gebläses kombiniert werden. Die Leistung ist stufenlos oder in Stufen regelbar.

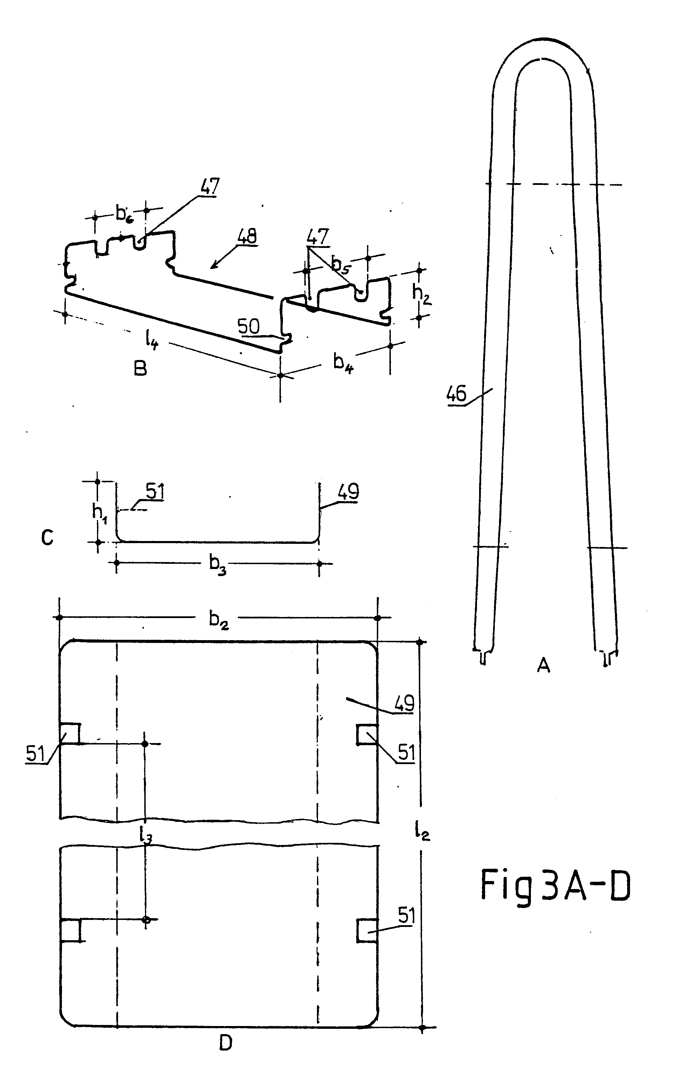

Besonders vorteilhaft ist, daß die elektrischen Heizstäbe nachträglich ein-und ausgebaut werden können. Sie bleiben deshalb stets für eventuelle Reparaturen oder Kontrollen zugänglich. Wie in Fig. 3 dargestellt, kann der Heizstab (46) U-förmig ausgebildet sein, wobei er etwa die Länge einer Fliese einnimmt (Fig. 3a). Der Heizstab (46) wird in Aussparungen (47) einer Drahthalterung (48) eingelegt und festgeklemmt. Die Drahthalterung (48) wird in ein Führungsblech (49) mit ca. 20 mm hohen Seitenwänden gestellt. Die seitlichen Einbuchtungen (50) in der Drahthaltrung (48) dienen der Kabelführung für den Stromanshluß der Heizstäbe. Die Drahthalterung (48) wird aus nicht rostendem und hitzbeständigem Material gefertigt, da sich das Heizregister auf ca. 800° C erwärmen kann.

Das in Fig. 3c dargestellte Führungsblech ist in Fig. 3d aufgeklappt gezeichnet. Die Abmaße sind beispielsweise wie folgt: $l_2$ = 240 mm, $b_2$ = 108 mm, $b_3$ = 68 mm, $h_1$ = 20 mm, $l_3$ = 120 mm.

Die Abmaße der Drahthalterung (48) sind etwa wie folgt:

$l_4$ = 120 mm, $b_4$ = 67 mm, $b_5$ = 42 mm, $b_6$ = 33 mm, $h_2$ = 27 mm.

Das Führungsblech (49) weist seitlich je zwei umbiegbare Laschen (51) auf. Die Laschen (51) werden über die seitlich laufenden Kabel heruntergebogen, so daß das Drahtgestell bzw. die Drahthalterung im Führungsblech (49) sowohl horizontal als auch vertikal arretiert ist.

Der Durchmesser des Heizstabs (46) beträgt ca. 6,5 mm.

Das Führungsblech (49) mit dem Heizstab (46) wird in die große Aussparung (15) des Hauptkanal-Fliesenbausteins (14) eingeschoben. In Fig. 2a ist das Heizelement (46, 48, 49) schematisch mit dem Bezugszeichen (52) gekennzeichnet. Durch die Drahthalterung (48) liegt der Heizstab (46) hoch im Luftstrom, so daß ein guter Wärmeaustausch stattfinden kann. Über die Verbindungskabel für den Elektroanschluß können eine beliebige Anzahl solcher Heizstäbe in die Hauptluftkanäle (12, 13) hintereinandergeschaltet und so die Leistung bestimmt werden. Beispielsweise ergeben zehn Stäbe à 350 W eine Heizleistung von 3.500W. Die elektrischen Heizregister liefern die Wärme, die dann vom Gebläse im Boden verteilt wird.

Als Alternative zur vorbeschriebenen Heizungsmöglichkeit kommt eine kombinierte Warmwasser-/Luftheizung in Betracht. Wie zuvor bereits ausgeführt, ist es 2000 x einfacher, Wärme mittels Wasser anstatt mittels Luft zu transportieren, d. h. man braucht die 2000-fache Luftmenge um die glieche Energie wie mit einer entsprechenden Wassermenge zu transportieren. Andererseits ist es Sinn einer Luftheizung, Wasserrohre im Boden möglichst dort zu vermeiden, wo ggf. irreparable Schäden z. B. durch defekte Rohre im Estrich auftreten können und in der Proxis auch auftreten. Bisher gab es keine geeignete Möglichkeiten, diesen beiden Ansprüchen gerecht zu werden und dabei alle vorbeschriebenen Nachteile der Luftheizung und zugleich die Nachteile der Warmwasser-Fußbodenheizung zu vermeiden.

Beim vorliegenden erfindungsgemäßen Heizungssystem können in den Rückluft-Längskanälen (39, 40) bzw. Rückluft-Querkanälen (42, 43) eine Warmwasser-Ringleitung (53), bestehend aus wasserführenden Kupferrohren mit Wärmetauschflächen installiert sein. Die Warmwasserzufuhr bzw. Abfuhr ist mit den Pfeilen (54, 55) gekennzeichnet. Die Wasserrohre liegen auf Stützunterlagen frei im Luftraum und können sich ggf. ausreichend bewegen, so daß Spannungen o. dgl. nicht entstehen.

Sowohl bei der reinen elektrischen als auch bei der kombinierten elektrischen/Warmwasserheizung drückt das Gebläse (23) die Luft mit hoher Geschwindigkeit in die Hauptluftkanäle (12, 13). Dort staut sich die Luft aufgrund der verschlossenen Enden an der Stirnseite (24) und sie kann nur seitlich in die Nebenluftkanäle (26, 27) entweichen, was über die gesamte Länge $l_1$ gleichzeitig geschieht. Von dort entweicht die Luft durch die Nebenluftaustrittsöffnungen (30) in den Fußboden, d. h. in die übrigen Heizfliesen (32). Der übrige Fußboden bzw. die Heizfliesen werden durch das Kammersystem der verwendeten Keramikfliesen (11) gebildet, die allseitig offen, d. h. mit Längs-und Querkanälen versehen sind. Hierdurch wird die Wärmeenergie gleichmäßig flächig an den ganzen Fußboden abgegeben.

Da der gesamte Boden allseitig luftdicht verschlossen ist, kann das Gebläse nur die im Boden befindliche Luft bewegen. Durch die Luftsammelkanäle (34) und die Rückluftkanäle (39, 40; 42, 43) wird die Luft zurückgesaugt, d. h. der Unterdruck in diesen Rückluftkanälen bewirkt, daß die aus den Nebenluftkanälen (26, 27) in den Fußboden strömende Luft in die Luftsammelkanäle (34, 35) gesaugt, von dort aus zu dem Endbereich (38) und von dort aus in die Rückluftkanäle zurück zum Gebläse (23) strömt.

Auf dem langen Rückweg in den Rückluftkanälen (39, 40, 42, 43) kann sich die Luft an den warmen Kupferrohren der Warmwasserheizung erwärmen. Ggf. kann hierdurch gänzlich auf die elektrische Heizung mittels den Heizstäben (46) verzichtet werden. Der Druck und der Unterdruck im Fußboden gleichen sich ständig aus, solange das Gebläse läuft. Dies geschieht mit hoher Geschwindigkeit. Bei einem Boden von ca. 40 $m^2$ wird die gesamte Luft etwa alle 3 Sek. umgewälzt und die von ihr aufgenommene Wärme der Fußbodenfläche zugeführt.

Während demnach Wärme problemlos über weite Strecke mittels des Warmwassers zum Ort des Verbrauchs transportiert wird, erfolgt die eigentliche Wärmeverteilung im Boden durch die umlaufende Warmluft in den gut wärmeleitenden Fliesen. Schallprobleme gibt es dabei nicht.

Das Gebläse (23) wird schalldicht eingebettet und beansprucht etwa einen Raum von ca. 55 cm Breite, 25 cm Tiefe und 16 cm Höhe.

Eine überaus interessante Lösung für ein Heizsystem ist die Kombination der Warmwasser-/Elektro-/Luftheizung. Ein System schließt nämlich das andere nicht aus und behindert es auch nicht. Hierdurch ergibt sich die Möglichkeit, den Boden bei Bedarf schnell elektrisch anzuwärmen, ohne daß gleich das ganze Zentralheizungssystem des Hauses in Gang gesetzt werden muß. Dabei kann sich ein schnelles Anwärmen auch auf nur einen einzigen Raum beschränken und zu jeder beliebigen Zeit, z. B. auch mit Zeitschaltuhr erfolgen.

Das System ist insofern energetisch optimal aufgebaut, als daß es kaum über Wärmeverluste und keinen überflüssigen Energieaufwand verfügt. Selbst die Abwärme des Gebläsemotors kommt der Raumbeheizung noch zu Gute. Es gibt auch keine Kanalsysteme außerhalb des Orts des Verbrauchs, d. h. Kanalführungen durch Decken und Wände entfallen vollständig.

Jeder Raum kann zu 100%ig individuell gesteuert werden wobei zugleich eine perfekte Anpassung an äußere Wärmebeeinflussung, wie z. B. Sonneneinstrahlung gegeben ist. Weiterhin ist eine exakte Raum-Verbrauchsmessung möglich. Die Erfindung bietet demnach eine Reihe von entscheidenden Vorteilen, die mit herkömmlichen Systemen nicht erzielbar sind.

Die Erfindung ist nicht auf das Ausführungsbeispiel beschränkt. Sie umfaßt vielmehr auch sämtliche fachmännischen Abwandlungen und Weiterbildungen ohne eigenen erfinderischen Gehalt.

Da es sich um eine Niedertemperaturheizung handelt, wäre die Kombination der Warmwasserheizung mit Sonnenenergie mittels Sonnenkollektoren durchaus sinnvoll. Ebenso kann die Fläche sowohl als Fußbodenfläche als auch Wandfläche beheizt werden.

**Ansprüche**

1. Heizsystem für eine Fußboden-oder Wandheizung, mit, einen Unterbau aufweisenden Fliesen die parallel und quer zu den Seitenkanten verlaufende Längs-und Querkanäle aufweisen, dadurch gekennzeichnet, daß die verlegten Fliesenbausteine ein gegenüber der Umgebung verschlossenes System bilden, daß zur Bildung von wenigstens einem geradlinig verlaufenden Hauptluftkanal (12, 13) und hiervon seitlich wegführende geradlinige Nebenluftkanäle (26, 27) nach unten hin geöffnete, U-förmige Kanäle (15, 19) vorgesehen sind, die mit einer Folie, insbesondere selbstklebenden Alu-Folie (56) ausgekleidet sind, und daß Luftaustrittsöffnungen (28, 30) in den Hauptluftkanälen (12, 13) bzw. Nebenluftkanälen (26, 27) zur Luftführung in die zu beheizenden Fliesen (Heizfliesen) (32) durch Einschneiden der Folie (56) gebildet sind.

2. Heizsystem nach Anspruch 1, dadurch gekennzeichnet, daß die Enden des Hauptluftkanals (12, 13) und der Nebenluftkanäle (26, 27) verschlossen sind, daß zwei parallel verlaufende, Nebenluftkanäle (26, 27) aufweisende Nebenkanal-Fliesenbaustein-Reihen (33) wenigstens eine weitere Heizfliesen-Reihe (32) mit offenen Längs-und Querkanälen (18, 19) zwischen sich einschließen, daß das dem Hauptluftkanal gegenüberliegende, stirnseitig geöffnete Ende der Heizfliesenreihe (32) in einen parallel zum Hauptluftkanal (12, 13) verlaufenden Luftsammelkanal (34) mündet, daß der Luftsammelkanal (34) bis zum entferntesten Ende (38) vom Lufteintrittsbereich 922) de zu beheizenden Fläche (10) führt und sich hieran ein Rückluftkanal (39, 40; 42, 43) zur Rückführung der Luft zum Hauptluftkanal (12, 13) anschließt.

3. Heizsystem nach Anspruch 1 oder 2, dadurch gekennzeichnet, daß dem Hauptluftkanal (12, 13) ein Gebläse, vorzugsweise ein Radialgebläse (23) vor-oder nachgeschaltet ist, wobei Luftführungsprofile zur Zuführung der Luft zum Hauptluftkanal (12, 13) vorgesehen sind.

4. Heizsystem nach Anspruch 1 oder 2, dadurch gekennzeichnet, daß zwei parallel nebeneinanderlaufende, die zu verlegende Fläche mittig teilende Fliesenreihen (14) mit Hauptluftkanälen (12, 13) vorgesehen sind, von denen durch Hauptluftaustrittsöffnungen (28) jeweils seitlich Nebenluftkanäle (26, 27) in Nebenkanal-Fliesenbausteine (33) abzweigen, daß durch Nebenluftaustrittsöffnungen (30) die Nebenluftkanäle (26, 27) mit Heizfliesen (32) zwischen jeweils zwei parallel verlaufenden Nebenkanälen (26, 27) verbunden sind, deren Längs-und Querkanäle (18, 19) geöffnet sind und die zu den parallel zu den Hauptluftkanälen (12, 13) und hinter den stirnseitigen Enden der Nebenluftkanäle (26, 27) verlaufenden Luftsammelkanälen (34, 35) führen, wobei die Luftführung in den Luftsammelkanälen (34, 35) gleichsinnig und parallel zur Luftführung in den Hauptkanälen (12, 13) erfolgt, und daß von Ende (38) der beiden Luftsammelkanäle (34, 35) parallel hierzu, jedoch mit gegensinniger Luftführung, Rückluft-Längskanäle (39, 40) und stirnseitig Rückluft-Querkanäle (42, 43) vorgesehen sind.

5. Heizsystem nach einem oder mehreren der Ansprüche 1 bis 4, dadurch gekennzeichnet, daß die verlegte Fläche (10) an zwei Längsseiten und einer Stirnseite durch Fliesenreihen mit Rückluft-Längskanälen (39, 40) bzw. Rückluft-Querkanälen (42, 43) und an der weiteren Stirnseite durch Randfliesen (44) begrenzt ist, wobei diese Fliesenreihen nach außen hin durch Randfliesen (44) bzw. Eckfliesen (45) abgeschlossen sind.

6. Heizsystem nach einem oder mehreren der Ansprüche 1 bis 5, dadurch gekennzeichnet, daß im Hauptluftkanal (12, 13) thermostatisch geregelt Elektro-Heizstäbe (46) im Luftstrom eingebettet sind, wobei der Heizstab (46) auf einem Führungsblech (49) mit Halterung (48) in den Hauptluftkanal (15) einschiebbar und wieder entnehmbar ist.

7. Heizsystem nach einem oder mehreren der Ansprüche 2 bis 5 dadurch gekennzeichnet, daß in den Rückluftkanälen (39; 40; 42, 43) und/oder in den Luftsammelkanälen (34, 35) warmwasserführende Rohre, insbesondere Kupferrohre o. dgl. als Heizelemente ggf. mit Warmeaustauschflächen vorgesehen sind.

8. Heizsystem nach einem oder mehreren der Ansprüche 1 bis 7, dadurch gekennzeichnet, daß eine kombinierte elektrische und eine Warmwasser-Heizung vorgesehen ist.

9. Heizsystem nach Anspruch 1, 2 oder 3, dadurch gekennzeichnet, daß die Hauptluftkanäle (12, 13) und/oder die Nebenluftkanäle (26, 27) allseitig mit einer Alu-Folie begrenzt sind.

Fig 1

0 254 286

Fig 2 A-G

Fig 3A-D